(19) Europäisches Patentamt
European Patent Office
Office européen des brevets

(11) **EP 0 862 844 B1**

(12) **EUROPÄISCHE PATENTSCHRIFT**

(45) Veröffentlichungstag und Bekanntmachung des Hinweises auf die Patenterteilung:
**20.02.2002   Patentblatt 2002/08**

(21) Anmeldenummer: **96938163.1**

(22) Anmeldetag: **11.11.1996**

(51) Int Cl.[7]: **H05B 39/04**, H02M 7/538

(86) Internationale Anmeldenummer:
**PCT/EP96/04910**

(87) Internationale Veröffentlichungsnummer:
**WO 97/19577 (29.05.1997 Gazette 1997/23)**

(54) **ELEKTRONISCHER TRANSFORMATOR**

ELECTRONIC TRANSFORMER

TRANSFORMATEUR ELECTRONIQUE

(84) Benannte Vertragsstaaten:
**AT BE CH DE FR GB IT LI NL SE**

(30) Priorität: **23.11.1995  DE 19543720**

(43) Veröffentlichungstag der Anmeldung:
**09.09.1998   Patentblatt 1998/37**

(73) Patentinhaber: **Tridonic Bauelemente GmbH**
**6850 Dornbirn (AT)**

(72) Erfinder: **JOHLER, Günther**
**A-6900 Bregenz (AT)**

(74) Vertreter: **Schmidt-Evers, Jürgen, Dipl.-Ing.**
**Patentanwälte Mitscherlich & Partner,**
**Sonnenstrasse 33**
**80331 München (DE)**

(56) Entgegenhaltungen:
DE-A- 4 228 641       DE-A- 4 238 913
DE-A- 4 416 049

- **PROCEEDINGS OF THE INDUSTRY APPLICATIONS SOCIETY ANNUAL MEETING, DEARBORN, SEPT. 28 - OCT. 1, 1991, Bd. 1, 1.Januar 1991, INSTITUTE OF ELECTRICAL AND ELECTRONICS ENGINEERS, Seiten 1061-1066, XP000280258 IMBERTSON P ET AL: "ASYMMETRICAL DUTY CYCLE PERMITS ZERO SWITCHING LOSS IN PWM CIRCUITS WITH NO CONDUCTION LOSS PENALTY"**
- **CONFERENCE RECORD OF THE INDUSTRY APPLICATIONS CONFERENCE, DENVER, OCT. 2 - 5, 1994, Bd. 3, 2.Oktober 1994, INSTITUTE OF ELECTRICAL AND ELECTRONICS ENGINEERS, Seiten 1979-1983, XP000519957 BLANCO C ET AL: "AN IMRPOVED ELECTRONIC TRANSFORMER FOR LOW POWER HALOGEN CYCLE LAMPS"**

**Beschreibung**

Die Erfindung betrifft einen elektronischen Transformator nach dem Oberbegriff des Patentanspruches 1. Insbesondere betrifft die Erfindung einen elektronischen Transformator zum Betreiben einer Niedervolt-Halogenlampe.

Das Grundprinzip von elektronischen Transformatoren ist aus C.H. Sturm/E. Klein, "Betriebsgeräte und Schaltungen für elektrische Lampen", Siemens Aktiengesellschaft, 1992, Seiten 295 ff. bekannt. Die bekannten elektronischen Transformatoren besitzen im wesentlichen ein Oberwellenfilter zur Funk-Entstörung, welches eingangsseitig an eine Wechselspannungsquelle angeschlossen wird. Mit dem Oberwellenfilter ist eine Gleichrichterschaltung, in der Regel eine normale Diodenschaltung, verbunden, die die von der Wechselspannungsquelle gelieferte Versorgungswechselspannung gleichrichtet. Die von der Gleichrichterschaltung erzeugte gleichgerichtete Zwischenkreisspannung wird einem Wechselrichter zugeführt, der zwei in einer Brückenschaltung angeordnete Schalter, in der Regel Leistungstransistoren, besitzt, die abhängig von der Zwischenkreisspannung abwechselnd ein- und ausgeschaltet werden. Der Wechselrichter entnimmt auf diese Weise der Gleichrichterschaltung eine in Rechteckblöcke zerhackte Spannung, die mittels eines Übertragers auf die für die Niedervolt-Halogenlampe notwendige Kleinspannung transformiert wird. Die Frequenz des Wechselrichters liegt dabei zwischen 20 und 50 kHz.

Das Dimmen der Niedervolt-Halogenlampe kann dabei auf verschiedene Arten geschehen. Bei der sogenannten Phasenanschnitts- bzw. Phasenabschnittsteuerung wird die dem Wechselrichter zugeführte Spannung verzögert bzw. vorzeitig abgeschaltet. Ebenso ist bekannt, die Niedervolt-Halogenlampe durch Pulsweitenmodulation zu dimmen, d.h. durch Verändern der Einschalt- bzw. Ausschaltzeiten der beiden Schalter des Wechselrichters, wobei die Ein- bzw. Ausschaltzeiten für beide Schalter stets gleich sind. Im ungedimmten Betrieb der Niedervolt-Halogenlampe werden die beiden Schalter des Wechselrichters so betrieben, daß die Austastphase, d.h. der Zeitbereich, in dem keiner der beiden Schalter eingeschaltet ist, möglichst kurz ist. Im Dimmbetrieb werden die Einschaltzeiten der beiden Schalter gegenüber dem ungedimmten Betrieb verkürzt, so daß sich die Austastzeit zwischen dem Ausschalten des einen Schalters und dem Einschalten des anderen Schalters erhöht. Wie bereits erwähnt, sind die Einschaltzeiten der beiden Schalter sowohl im ungedimmten Betrieb als auch im Dimmbetrieb gleich lang.

Bei dem zuvor beschriebenen Dimmverfahren mittels Pulsweitenmodulation besteht jedoch das Problem, daß während der Austastzeiten Oszillationen durch einen Schwingkreis verursacht werden können, der einerseits durch die Transformator-Induktivität und andererseits durch parallel zu den Schaltern liegende Kapazitäten gebildet wird.

In der DE-A1 42 28 641 ist ein elektronisches Vorschaltgerät zum Betreiben einer Gasentladungslampe gemäß dem Oberbegriff des Anspruches 1 offenbart, das mit einem freischwingenden Wechselrichter arbeitet und ein Dimmen der Gasentladungslampe zuläßt. Zum Dimmen der Gasentladungslampe ist eine Steuerschaltung vorgesehen, mittels welcher das Tastverhältnis mittels eines der beiden Schalter in Abhängigkeit von einer Steuerinformation beeinflußbar ist. Im Gegensatz zu der vorliegenden Erfindung beschreibt die DE-A1-42 28 641 keinen elektronischen Transformator, sondern ein elektronisches Vorschaltgerät, welches sich im Ausgangskreis wesentlich von einem elektronischen Transformator unterscheidet, insbesondere da es in seinem Ausgangskreis eine Induktivität aufweist. Dadurch ergeben sich grundsätzliche Unterschiede bei der Realisierung der Dimmung dieser Geräte. Bei elektronischen Vorschaltgeräten ist aufgrund der vorhandenen Induktivität im Ausgangskreis in der Regel eine Dimmung sowohl durch Frequenzvariation als auch durch Tastverhältnisvariaton möglich. Da ein elektronischer Transformator gemäß dem Oberbegriff von Anspruch 1 jedoch keine Induktivität im Ausgangskreis aufweist, ist bei einem derartigen elektronischen Transformator keine Dimmung durch Frequenzvariation möglich. Die Dimmung erfolgte bei elektronischen Transformatoren bisher ausschließlich durch die eingangs beschriebene Phasenanschnittdimmung bzw. Phasenabschnittdimmung.

Ferner beschreibt der Artikel "Asymmetrical Duty Cycle Permits Zero Switching Loss in PWM Circuits With No Conduction Loss Penalty" in Proceedings of the Industry Applications Society Annual Meeting, Dearborn, Sept. 28- Oct. 1, 1991, Bd. I, Seiten 1061-1066 allgemein die Ansteuerung eines Lastkreises mit Hilfe von zwei alternierenden Schaltern eines Wechselrichters. Dabei wird zum Steuern der dem Lastkreis zugeführten Leistung das Tastverhältnis zwischen den Einschaltzeiten der beiden Schalter des Wechselrichters verändert, d.h. die Einschaltzeit des einen Schalters wird auf Kosten der Einschaltzeit des anderen Schalters verlängert.

Aufgabe der vorliegenden Erfindung ist es, einen elektronischen Transformator nach dem Oberbegriff des Patentanspruches 1 anzugeben, bei dem Oszillationen während der Austastzeiten vermieden werden. Darüber hinaus soll eine komfortable Steuerung der Helligkeit, insbesondere auch während des Starts, ermöglicht werden.

Die Aufgabe wird durch die im Patentanspruch 1 angegebenen Merkmale gelöst.

Erfindungsgemäß wird - vergleichbar mit dem aus dem oben genannten Artikel bekannten Verfahren - zum Dimmen der Niedervolt-Halogenlampe das Tastverhältnis zwischen den Einschaltzeiten der beiden Schalter des Wechselrichters verändert, d.h. die Einschaltzeit des einen Schalters wird auf Kosten der Einschaltzeit des anderen Schalters verlängert. Im ungedimmten Betrieb werden die beiden Schalter abwechselnd gleich lange ein- bzw. ausgeschaltet. Sowohl im gedimmten als auch im ungedimmten Betrieb wird die Austastzeit zwischen dem Einschalten des einen Schalters und dem Ausschalten des anderen Schalters des Wechselrichters möglichst gering gehalten. Auf diese Weise kann das Auftreten von Oszillationen während der Austastzeiten zwischen dem Einschalten und dem Ausschalten der beiden Wechselrichterschalter vermieden werden.

Darüber hinaus weist die die Schalter des Wechselrichters ansteuernde Steuerschaltung eine Softstartschaltung auf, durch welche die Einschaltzeiten der beiden Wechselrichterschalter derart gesteuert werden, daß nach dem Einschalten des elektronischen Transformators die Lampe innerhalb eines bestimmten Zeitintervalls sukzessive von einem voll gedimmten Zustand in den ungedimmten Zustand gefahren wird.

Dies hat zur Folge, daß nach einem Start des Transformators die Lampe nicht sprunghaft sondern sanft auf die Endhelligkeit gefahren wird, was von einem Betrachter im Vergleich zu einer plötzlichen Helligkeitsveränderung als wesentlich angenehmer empfunden wird.

In Weiterbildung der Erfindung weist die Steuerschaltung eine Zwischenkreisspannung-Ausregelschaltung auf, die die von der Gleichrichterschaltung gelieferte Zwischenkreisspannung überwacht und das Tastverhältnis zwischen dem Einschalten der beiden Schalter des Wechselrichters auf einen bestimmten Dimmwert verändert, wenn die Zwischenkreisspannung einen bestimmten Schwellenwert übersteigt, um die Ausgangsspannung des Transformators in diesem Falle konstant zu halten.

Ferner ist es von Vorteil, eine Kurzschlußüberwachung vorzusehen, die den Ausgangsstrom des elektronischen Transformators bzw. eine dazu proportionale Meßgröße überwacht und die das abwechselnde Ein-/Ausschalten der beiden Wechselrichterschalter unterbricht, falls der Ausgangsstrom des elektronischen Transformators bzw. die dazu proportionale Meßgröße einen bestimmten Schwellenwert überschreitet.

Ferner wird die Steuerschaltung vorzugsweise mit einer Temperaturüberwachungsschaltung versehen, mit der die Niedervolt-Halogenlampe durch Veränderung des Tastverhältnisses zwischen den Einschaltzeiten der Wechselrichterschalter heruntergedimmt werden kann, falls die von der Temperaturüberwachungsschaltung erfaßte Temperatur einen bestimmten Temperaturgrenzwert überschreitet.

Des weiteren ist es von Vorteil, daß die Steuerschaltung eine Zwischenkreisspannung-Überwachungsschaltung aufweist, die das abwechselnde Ein-/Ausschalten der Wechselrichterschalter unterbricht, falls die von der Gleichrichterschaltung gelieferte Zwischenkreisspannung einen bestimmten Schwellenwert übersteigt.

Es ist weiter von Vorteil, eine Leerlaufabschaltungseinheit vorzusehen, die den Leerlaufbetrieb des elektronischen Transformators ermittelt und in diesem Fall das abwechselnde Ein-/Ausschalten der Wechselrichterschalter unterbricht.

Vorzugsweise werden die zuvor beschriebenen Schaltungen mit einer Timerschaltung kombiniert, so daß das Unterbrechen des abwechselnden Ein-/Ausschaltens der beiden Wechselrichterschalter durch die Timerschaltung gesteuert und lediglich für eine bestimmte Zeitspanne erfolgt. Liegt nach Ablauf der Zeitspanne der Fehlzustand weiterhin vor, so wird der Betrieb des Wechselrichters weiterhin unterbrochen bis der Fehlzustand behoben ist.

Durch die in den weiteren Unteransprüchen aufgeführten Maßnahmen sind weitere vorteilhafte Weiterbildungen und Verbesserungen des in Anspruch 1 angegebenen elektronischen Transformators möglich.

Die Erfindung wird nachfolgend unter Bezugnahme auf die Zeichnung anhand eines bevorzugten Ausführungsbeispieles beschrieben. Es zeigen:

Fig. 1            ein Ausführungsbeispiel des erfindungsgemäßen elektronischen Transformators,

Fig. 2a-2c und 3a-3b          Spannungs- und Stromverläufe bei dem in Figur 1 gezeigten erfindungsgemäßen elektronischen Transformator im ungedimmten Betrieb,

Fig. 4a-4c, 5a-5b und 6a-6b     Spannungs- und Stromverläufe bei dem in Figur 1 gezeigten erfindungsgemäßen Ausführungsbeispiel im Dimmbetrieb,

Der elektronische Transformator weist eingangsseitig ein Oberwellenfilter, insbesondere zur Funkentstörung, auf, wobei die Spule L1 und die Kondensatoren C1 und C2 zur Funkentstörung des Transformators dienen. Die Widerstände R1 und R2 schützen den elektronischen Transformator vor Überspannungen und Störimpulsen von der Netzspannung. Die von dem Oberwellenfilter gelieferte Netzspannung wird durch die aus den Dioden D1-D4 gebildete Gleichrichterbrückenschaltung gleichgerichtet und als Zwischenkreisspannung dem eigentlichen Wechselrichter des Transformators und dessen Steuerschaltung zugeführt. Der Wechselrichter weist zwei steuerbare Schalter 2 und 3 auf, die jeweils über eine Dioden-Widerstandsschaltung D7, R8 bzw. D8, R9 angesteuert werden. Die steuerbaren Schalter 2 und 3 werden in der Regel durch Leistungstransistoren, d.h. durch Feldeffekttransistoren gebildet. Die steuerbaren Schalter 2 und 3 werden abwechselnd ein- und ausgeschaltet, so daß am Verbindungspunkt C zwischen den beiden Kondensatoren C4 und C5, die zu den steuerbaren Schaltern 2 und 3 parallel geschaltet sind, eine halbsinusförmige Gleichspannung auftritt, die mit einer Wechselspannung (Rippel) moduliert ist. Zwischen den Verbindungspunkten der Halbleiterschalter 2 und 3 und der Kondensatoren C4 und C5 liegt die Primärwicklung eines Übertragers 16, an dessen Sekundärwicklung eine ohm'sche Last, in diesem Fall eine Niedervolt-Halogenlampe 1 angeschlossen ist. Zwischen den Ausgängen A und G des elektronischen Transformators liegt im ungedimmten Fall eine doppelsinusförmige zerhackte Wechselspannung, wobei im ungedimmten Fall das Tastverhältnis der Zerhackungsfrequenz - wie beim bekannten Stand der Technik - symmetrisch ist. Im Dimmbetrieb liegt dagegen am Ausgang A eine Wechselspannung an, bei der das Tastverhältnis der Zerhackungsfrequenz unsymmetrisch ist.

Die Widerstände R3-R5 sowie der Kondensator C3 bilden die Anlaufspannungsversorgung des Wechselrichters und dessen Steuerschaltung. Sobald der Wechselrichter zu schwingen beginnt, wird die Versorgungsenergie kapazitiv mittels C6 am Mittelpunkt der Halbbrücke bei C4 und C5 ausgekoppelt und über die Dioden D9-D10 sowie den Kondensator C3 dem Wechselrichter bzw. dessen Steuerschaltung zur Spannungsversorgung zurückgeführt. Mittels einer Diode D5 wird die Spannung am Kondensator C3 stabilisiert, d.h. die Betriebsspannungsversorgung des elektronischen Transformators erfolgt über den Kondensator C3. Diese kapazitive Ankopplung hat den Vorteil, daß der Kondensator C6 größer als bisher üblich gewählt werden kann, da C6 nicht mehr im Einschaltzeitpunkt von dem unteren Schalter 3 kurzgeschlossen wird und somit erhöhte Schaltverluste verursacht.

Nachfolgend soll der Aufbau des Wechselrichters bzw. dessen Steuerschaltung näher erläutert werden.

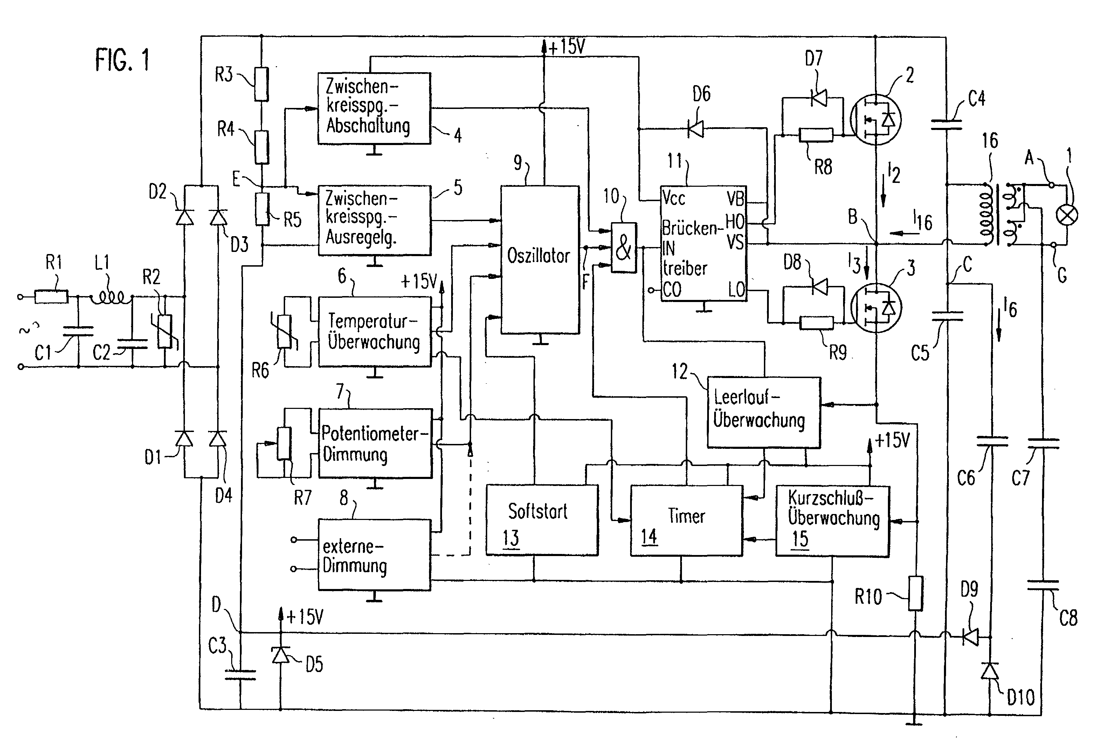

Die Halbbrücken-Schalter 2 und 3 werden durch einen Brückentreiber 11 angesteuert, der wiederum von einem Oszillator 9 gesteuert wird, welcher eine Schwingung fester Frequenz und Amplitude liefert. Die Austastzeit zwischen den Einschaltphasen der beiden Schalter 2 und 3 wird durch die externen Gate-Widerstände R8 und R9 sowie die Dioden D7 und D8 realisiert, um einen Brückenkurzschluß zu vermeiden. Die eigentliche Dimmung der Niedervolt-Halogenlampe 1 erfolgt durch Verändern des Tastverhältnisses des Oszillators 9, d.h. durch Verändern der Einschaltzeiten der beiden Schalter 2 und 3, wodurch der eine Schalter länger eingeschaltet ist als der andere und sich die Spannung an den Kondensatoren C4 und C5 entsprechend verändert. Zum Einstellen des Tastverhältnisses des Oszillators 9 ist in Figur 1 eine Potentiometerdimmung 7 mit einem Potentiometer R7 vorgesehen. Ebenso kann jedoch das Tastverhältnis des Oszillators 9 durch eine externe Dimmungseinheit 8 gesteuert werden, die über ein Interface mit beispielsweise einem digitalen Bus oder mit einer bekannten 0-10 V Schnittstelle verbunden ist. Der Oszillator 9 wird von einer Gleichspannungsquelle versorgt und bildet mit dem Brückentreiber 11 vorzugsweise eine Baueinheit.

Der in Figur 1 gezeigte elektronische Transformator weist eine Kurzschlußabschaltung 15 zur Kurzschluß- oder Überlasterkennung auf. Zu diesem Zweck wird der in der Halbbrücke mit den Schaltern 2 und 3 fließende Strom bzw. eine dazu proportionale Meßgröße (Spannung) im unteren Zweig des Schalters 3 mittels eines Shunt-Widerstandes R10 erfaßt und ausgewertet. Übersteigt die somit ermittelte Meßgröße einen bestimmten Schwellenwert, so aktiviert die Kurzschlußabschaltung 15 eine Timerschaltung 14, die beispielweise als Pulszähler oder Zeitglied (RC-Schaltung) realisiert sein kann. Die Timerschaltung 14 unterbricht beispielsweise im Zusammenspiel mit einem UND-Glied 10 das Betreiben der Schalter 2 und 3 für eine bestimmte Zeit. Nach Ablauf dieser Zeitspanne wird erneut überprüft, ob die erfaßte Meßgröße inzwischen den Schwellenwert unterschritten hat. Ist dies nicht der Fall, so wird erneut die Timerschaltung 14 aktiviert und das Ein-/Ausschalten der Schalter 2 und 3 erneut für die bestimmte Zeitspanne unterbrochen. Alternativ kann die Timerschaltung auch derart modifiziert sein, daß sie den Wechselrichter nur dann unterbricht, wenn beispielsweise zehn Impulse des durch die Kurzschlußabschaltung überwachten Stromes größer als der vorgegebene Schwellenwert sind.

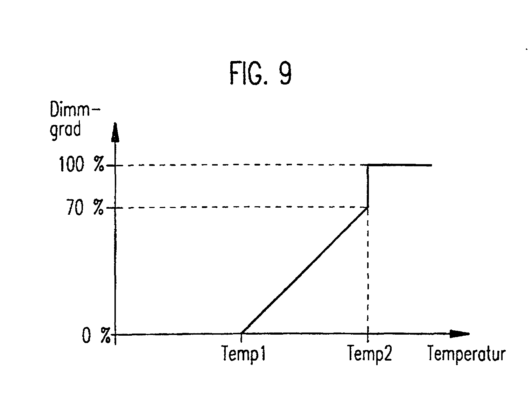

Des weiteren ist eine Temperaturüberwachung 6 mit einem Temperatursensor R6, beispielsweise einen NTC- oder PTC-Widerstand, vorgesehen. Die Temperaturüberwachungsschaltung 6 soll bewirken, daß bei erhöhter Temperatur, d.h. bei starker Wärmeverlustleistung, eine Reduzierung des Tastverhältnisses erfolgt, d.h. die Niedervolt-Halogenlampe 1 heruntergedimmt wird, um die Verlustleistung auf diese Weise zu reduzieren. Die in Figur 1 dargestellte Temperaturüberwachungsschaltung 6 funktioniert dabei wie in Figur 9 dargestellt. Übersteigt die überwachte Temperatur einen bestimmten Grenzwert Temp1, so erfolgt eine Dimmung, d.h. eine Tastverhältnisänderung durch den Oszillator 9. Oberhalb einer zweiten Grenztemperatur Temp2 wird für eine vorbestimmte Zeitspanne der Wechselrichter, d.h. das Ein/Ausschalten der Schalter 2 und 3, unterbrochen bzw. die Niedervolt-Halogenlampe 1 vollständig heruntergedimmt. Zu diesem Zweck ist die Temperaturüberwachungsschaltung 6 mit der Timerschaltung 14 gekoppelt, so daß nach Ablauf der Timerzeit, während der der Wechselrichter deaktiviert ist, ein Wiedereinschalten des Wechselrichters möglich ist.

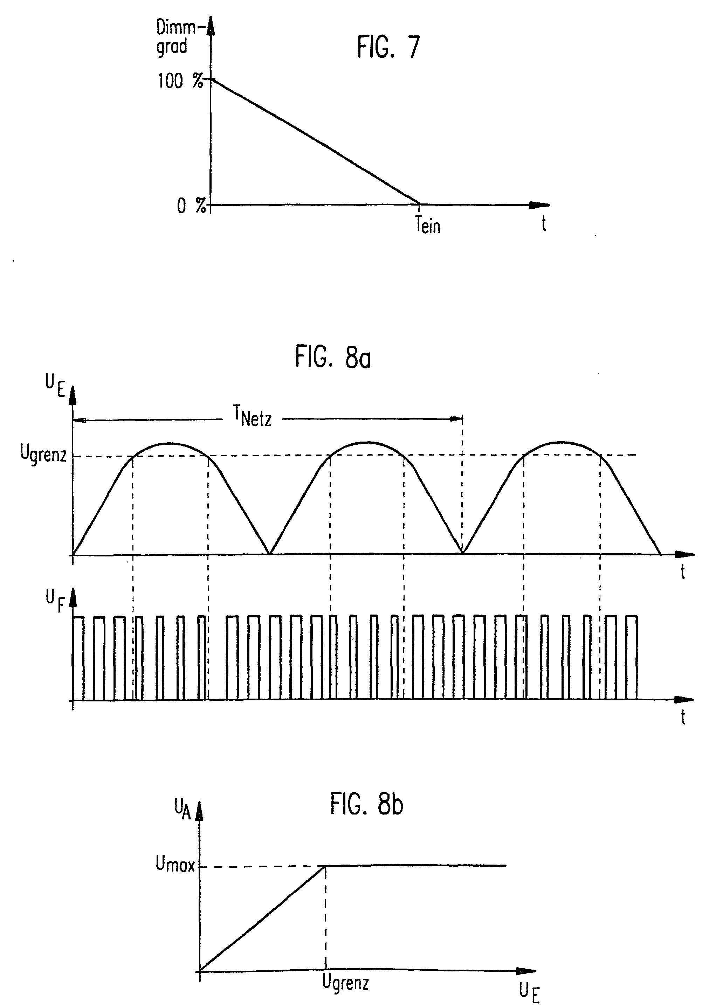

Eine Zwischenkreisspannung-Ausregelschaltung 5 dient zur Überwachung der von der Gleichrichterschaltung D1-D4 gelieferten Zwischenkreisspannung, die am Schaltungspunkt E auftritt. Die Zwischenkreisspannung-Ausregelschaltung ruft eine Veränderung des Tastverhältnisses des Oszillators 9 hervor, wenn die gleichgerichtete Zwischenkreisspannung einen bestimmten Schwellenwert überschreitet. Die Funktion der erfindungsgemäßen Zwischenkreisspannung-Ausregelschaltung 5 ist aus Figur 8a und 8b ersichtlich. Die obere Hälfte der Figur 8a zeigt die von der Gleichrichterschaltung D1-D4 gelieferte Zwischenkreisspannung $U_E$, die mit der halben Netzspannungsperiode $T_{Netz}$ periodisch ist. Übersteigt die Zwischenkreisspannung $U_E$ einen vorgegebenen Schwellenwert $U_{grenz}$, so ruft die Zwischenkreis-Ausregelschaltung 5 automatisch eine Tastverhältnisänderung des Oszillators 9 und somit ein Herunterdimmen der Niedervolt-Halogenlampe 1 hervor. Dies ist aus der unteren Hälfte der Figur 8a ersichtlich, welche die Ausgangsimpulse des Oszillators 9 darstellt. Auf diese Weise wird die Ausgangsspannung des elektronischen Transformators, d.h. die Lampenspannung der Niedervolt-Halogenlampe 1, durch eine Veränderung des Tastverhältnisses des Oszillators 9 konstant gehalten, wenn die gleichgerichtete Zwischenkreisspannung eine bestimmte Grenzspannung $U_{grenz}$ (beispielsweise 230 V) übersteigt. Die Zwischenkreis-Ausregelschaltung 5 dient somit zur Erhöhung der Lebensdauer der Niedervolt-Halogenlampe 1. Figur 8b zeigt den Zusammenhang zwischen der Zwischenkreisspannung $U_E$ und der Ausgangsspannung des elektronischen Transformators $U_A$, welcher den in Figur 8a gezeigten Spannungszusammenhängen entspricht. Bei Überschreiten der Schwellenspannung $U_{grenz}$ der Zwischenkreisspannung $U_E$ wird die Ausgangsspannung des elektronischen Transformators $U_A$ auf eine Maximalspannung $U_{max}$ begrenzt.

Vorteilhafterweise wird die Zwischenkreis-Ausregelschaltung 5 so modifiziert, daß kontinuierlich der Schwellenwert $U_{grenz}$ überwacht und bei Überschreiten des Schwellenwertes $U_{grenz}$ über die gesamte Halbwelle der Dimmgrad erhöht wird, so daß die Lampe geschont wird.

Neben der Zwischenkreisspannung-Ausregelschaltung 5 ist eine Zwischenkreisspannung-Abschaltung 4 vorhanden, die ebenso die Zwischenkreisspannung $U_E$ überwacht. Dieser Schaltungsblock dient jedoch zum direkten Abschalten des Brückentreibers 11, d.h. zur Unterbrechung der Aktivität des Wechselrichters, wenn die Zwischenkreisspannung einen vorgegebenen Schwellenwert überschreitet. Bei dem in Figur 1 gezeigten Ausführungsbeispiel erfolgt das Abschalten des Wechselrichters direkt durch die Zwischenkreisspannung-Abschaltung 4 beispielsweise im Zusammenspiel mit dem UND-Glied 10. Vorteilhafterweise wird jedoch die Zwischenkreisspannung-Abschaltung 4 mit der Timerschaltung 14 kombiniert, so daß ein Wiedereinschalten des Wechselrichters durch die Timerschaltung 14 nach einer bestimmten Zeit möglich ist. Die Schwellenspannung der Zwischenkreisspannung-Abschaltung 4, bei der die Unterbrechung des Brückentreibers hervorgerufen wird, ist in der Regel wesentlich höher als diejenige Schwellenspannung der Zwischenkreisspannung-Ausregelschaltung 5, bei der die Ausgangsspannung des elektronischen Transformators durch Tastverhältnisänderung des Oszillators 9 konstant geregelt wird.

Der erfindungsgemäße elektronische Transformator weist des weiteren eine Softstartschaltung 13 auf, die über eine Dimmung, d.h. eine Tastverhältnisänderung des Oszillators 9, den Strom vorgibt, welchen die Niedervolt-Halogenlampe 1 aufnehmen darf. Beim Einschalten des Wechselrichters mit einer kalten Lampe 1 fließen ohne entsprechende Schutzmaßnahmen sehr hohe Ströme durch die Lampenwendeln. Diese hohen Ströme verkürzen die Lampenlebensdauer erheblich. Um dies zu vermeiden, wird bei bekannten elektronischen Transformatoren die Kurzschlußabschaltung derart eingestellt, daß sie während einer Startphase des elektronischen Transformators aktiv wird. Damit die Lampenwendel hochohmig wird und die Niedervolt-Halogenlampe 1 zu leuchten beginnt, muß ein gewisser Mindeststrom zugelassen werden, der jedoch im Dauerkurzschlußfall unerwünscht ist. Daher muß bei bekannten elektronischen Transformatoren ein Kompromiß zwischen der sogenannten Softstartzeit und der Dauerkurzschlußleistung eingegangen werden. Dies wird mithilfe der erfindungsgemäßen Softstartschaltung 13 vermieden, da der Softstart mittels Dimmung realisiert wird. Beim Einschalten des elektronischen Transformators wird - wie in Figur-7 dargestellt - mit einem maximalen Dimmgrad die Niedervolt-Halogenlampe 1 betrieben und der Dimmgrad anschließend kontinuierlich reduziert, bis zu einem vorgegebenen Einschaltzeitpunkt $T_{ein}$ die Nennleistung erreicht ist. Dann wird der Lampenstrom auf einen konstanten Pegel gehalten. Zu diesem Zeitpunkt $T_{ein}$ muß nicht zwangsläufig der Dimmgrad 0% betragen, sondern kann auch jeden beliebigen Wert zwischen 100% und 0% annehmen, der einen vorschriftsmäßigen Betrieb der Niedervolt-Halogenlampe 1 erlaubt. Die Softstartschaltung 13 des erfindungsgemäßen elektronischen Transformators ermöglicht es, die Kurzschlußüberwachung durch die Kurzschlußüberwachungsschaltung 15 unabhängig von der Softstartschaltung 13 vorzunehmen. Durch die erfindungsgemäße Softstartschaltung 13 wird der Lampenstrom auch beim Einschalten des elektronischen Transformators nicht wesentlich größer als der Nennstrom und auch eine sensibel eingestellte Kurzschlußüberwachungsschaltung 15 spricht nicht an. Die erfindungsgemäße Softstartschaltung 13 ermöglicht somit, das Kurzschlußverhalten und den Softstart des elektronischen Transformators optimal und unabhängig voneinander einzustellen.

Probleme können bei zwangsgesteuerten elektronischen Transformatoren im Leerlaufbetrieb auftreten, insbesondere dann, wenn das Tastverhältnis zwischen den Einschaltzeiten der steuerbaren Schalter 2 und 3 - wie erfindungsgemäß vorgesehen - unsymmetrisch ist. In diesem Fall kann sich aufgrund der Induktivität des Übertragers 16 ein sehr hoher Strom aufbauen, da die Halbbrückenkondensatoren C4 und C5 mit der Primärwicklung des Übertragers 16 einen LC-Resonanzkreis bilden. Da der Wechselrichter über den Oszillator 9 zwangsgesteuert ist, muß zum Schutz des Leistungskreises des elektronischen Transformators ein Leerlaufbetriebsfall erkannt und in diesem Fall beispielsweise der Wechselrichter für eine vorgegebene Zeitspanne abgeschaltet werden. Somit wird verhindert, daß im Dimmbetrieb der Ausgangsstrom stetig ansteigt und es aufgrund der Stromquelleneigenschaft der Primärwicklung des Übertragers 16 zu Kurzschlüssen in der Brückenschaltung mit den Schaltern 2 und 3 und den Kondensatoren C4 und C5 kommen kann.

Eine Möglichkeit, den zuvor genannten Problemen im Leerlaufbetrieb entgegenzuwirken, liegt darin, den Leerlaufbetrieb zu erkennen und in diesem Fall den Wechselrichter für eine vorgegebene Zeitspanne abzuschalten. Zu diesem Zweck ist bei der in Figur 1 dargestellten erfindungsgemäßen elektronischen Transformatorschaltung eine Leerlaufüberwachungsschaltung 12 vorgesehen, die dieselbe Spannung an dem Shunt-Widerstand R10 überwacht wie die Kurzschlußüberwachungsschaltung 15. Übersteigt die somit erfaßte Spannung einen bestimmten Schwellenwert nicht, so schließt die Leerlaufüberwachungsschaltung 12 auf das Vorliegen eines Leerlaufbetriebes sofern diese Überwachungsschaltung 12 gleichzeitig über die Verbindung mit dem Eingangsanschluß des Brückentreibers 11 feststellt, daß die Schalter 2 und/oder 3 von dem Brückentreieber 11 angesteuert werden. In diesem Fall wird die Timerschaltung 14 von der Überwachungsschaltung 12 angesteuert und unterbricht beispielsweise im Zusammenspiel mit dem UND-Glied 10 den Brückentreiber 11 für eine vorgegebene Zeitspanne.

Alternativ zu der in Figur 1 dargestellten Möglichkeit der Leerlaufüberwachung kann auch der Wechselrichter während des Betriebes über einen Kondensator oder eine sonstige Reaktanz vom Verbindungspunkt C zwischen den Kondensatoren C4 und C5 aus versorgt werden. In diesem Fall bricht die Oszillatorversorgung während eines Leerlaufbetriebes periodisch zusammen, da die Anlaufspannungsversorgung des elektronischen Transformators nicht in der Lage ist, den Wechselrichter im Betrieb zu versorgen und der Spannungsrippel am Verbindungspunkt zwischen den Kondensatoren C4 und C5 nicht ausreicht, um genügend zusätzlichen Versorgungsstrom vom Ausgangskreis her zu liefern. Der Wechselrichter schaltet daher periodisch ab und versucht selbständig, nach Aufladen des Startkondensators C3 der Anlaufversorgung des elektronischen Transformators erneut zu starten. Auf diese Weise ist ein automatischer Wiederstart der Niedervolt-Halogenlampe 1 nach einem Wechsel derselben möglich. Eine weitere Variante der in Figur 1 dargestellten Leerlaufüberwachung liegt darin, daß die Leerlaufüberwachungsschaltung 12 nach Feststellen des Leerlaufbetriebes selbständig die Oszillatorfrequenz 9 derart erhöht, daß im Ausgangskreis nahezu kein Ausgangsstrom mehr fließt.

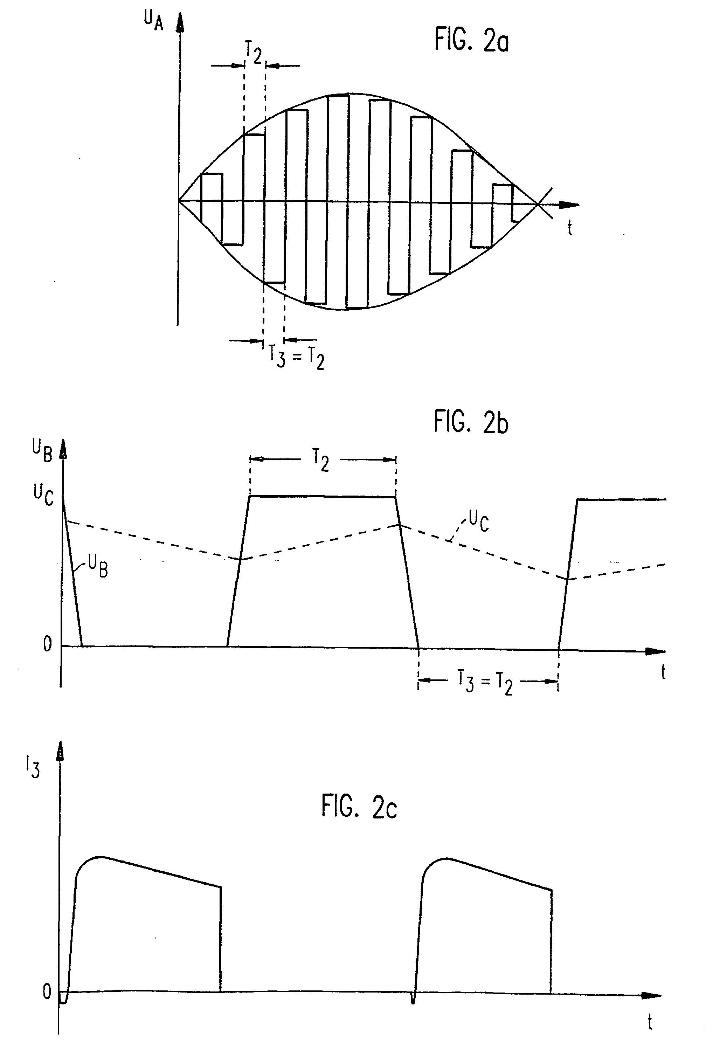

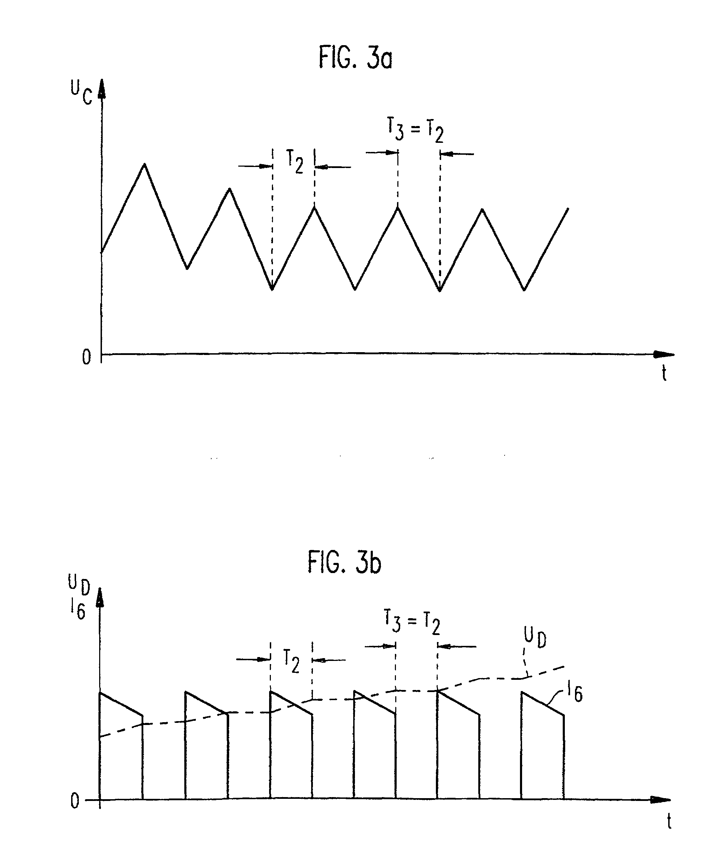

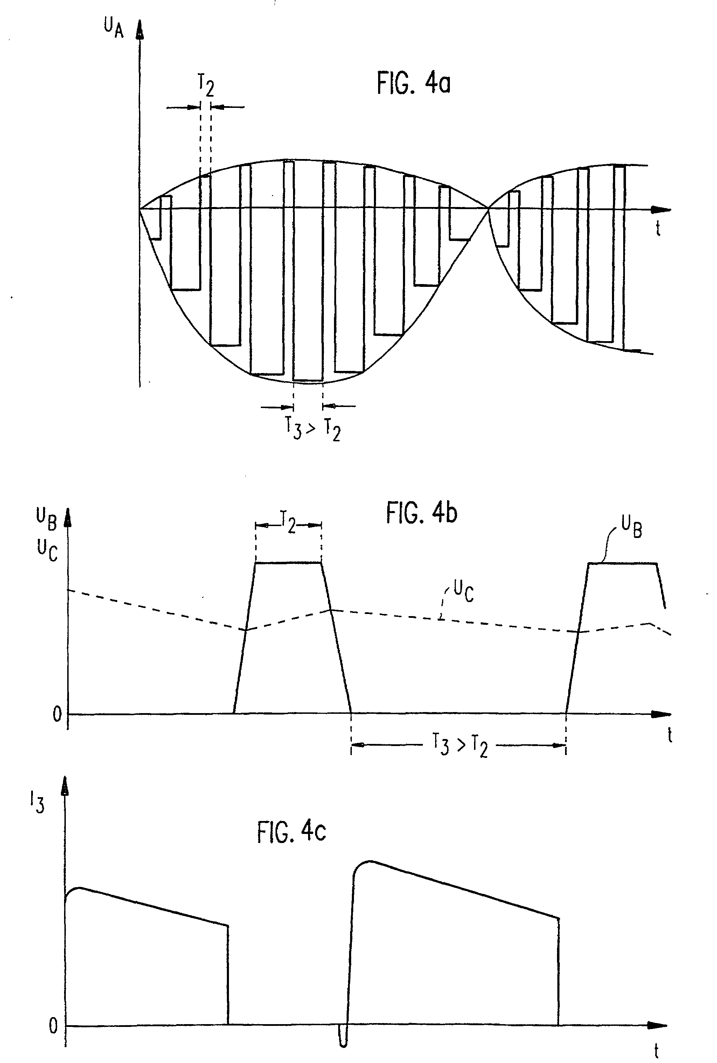

Nachfolgend soll die Funktionsweise der in Figur 1 dargestellten erfindungsgemäßen elektronischen Transformatorschaltung anhand der in Figur 2-6 gezeigten Strom- und Spannungsverläufe näher erläutert werden. Dabei zeigen die Figuren 2 und 3 Strom- und Spannungsverläufe des elektronischen Transformators im ungedimmten Betrieb, während die Figuren 4-6 Strom-Spannungsverläufe im gedimmten Betrieb darstellen.

Figur 2a zeigt die an dem Ausgangsanschluß A des elektronischen Transformators auftretende Ausgangs- bzw. Lampenspannung $U_A$ im ungedimmten Betrieb. Es ist ersichtlich, daß die Ausgangsspannung $U_A$ eine doppelsinusförmige Spannung mit einem symmetrischen Tastverhältnis der Zerhackungsfrequenz darstellt, d.h. die Einschaltzeit $T_2$ des oberen Schalters 2 entspricht der Einschaltzeit $T_3$ des unteren Schalters 3 des Wechselrichters.

Figur 2b und 2c zeigen im vergrößerten Maßstab den Verlauf der an dem Verbindungspunkt B zwischen den Schaltern 2 und 3 bzw. an dem Verbindungspunkt C zwischen den Kondensatoren C4 und C5 auftretenden Spannungen sowie des über den Halbleiterschalter 3 fließenden Stromes. Während des Zeitintervalls $T_2$, währenddessen der obere Schalter geöffnet ist, ist der untere Schalter 3 des Wechselrichters geschlossen, so daß kein Strom $I_3$ fließt.

Figur 3a und 3b zeigen in geraffter Darstellung die an dem Verbindungspunkt C auftretende Wechselspannung $U_C$ bzw. die an dem Kondensator C3 auftretende Versorgungsspannung $U_D$ und den über den AusKopplungskondensator C6 fließenden Strom $I_6$. Figur 3a ist deutlich der Spannungsrippel der Spannung $U_C$ zu entnehmen, wobei jedoch dieser Spannungsrippel aufgrund der identischen Einschaltzeiten $T_2$ und $T_3$ symmetrisch ist. Aus Figur 3b ist ersichtlich, daß während der Einschaltzeit des oberen Schalters 2, d.h. der Ausschaltzeit des unteren Schalters 3, der Strom $I_6$ über den AusKopplungskondensator C6 und die Diode D9 an den Eingang des Wechselrichters und dem Kondensator C3 zugeführt wird, der sich sukzessive während der Einschaltzeiten $T_2$ des oberen Schalters 2 auflädt, so daß die an dem Kondensator C3 anliegende Spannung $U_D$ sukzessive ansteigt bis sie durch die Diode D5 begrenzt wird.

Figur 4a zeigt den Verlauf der Ausgangsspannung $U_A$ des erfindungsgemäßen elektronischen Transformators im Dimmbetrieb, wobei das Tastverhältnis zwischen der Einschaltzeit $T_2$ des oberen Schalters 2 und der Einschaltzeit $T_3$ des unteren Schalters 3 verändert ist, so daß gilt $T_3 > T_2$. Am Ausgang ergibt sich somit ein unsymmetrischer Spannungsverlauf. Für den Effektivwert der Ausgangsspannung $U_A$ gilt:

$$U_A = \frac{U_E}{N} \sqrt{d \cdot (1-d)}. \qquad (1)$$

Dabei gilt für das Tastverhältnis d:

$$d = \frac{T_2}{T}. \qquad (2)$$

T bezeichnet die Periodendauer der Eingangsspannung und $T_2$ die gegenüber der Einschaltzeit $T_3$ des unteren Schalters 3 kürzere Einschaltzeit des oberen Schalters 2. Für $T_2$ ist der Bereich 0 bis 0,5·T zulässig.

Für das Übersetzungsverhältnis N des Übertragers 16 gilt:

$$N = \frac{\text{Windungsanzahl der Primärwicklung}}{\text{Windungsanzahl der Sekundärwicklung}} \qquad (3)$$

Figur 4b und 4c zeigen die den in Figur 2b und 2c dargestellten Strom- und Spannungsverläufe entsprechenden Verläufe im gedimmten Betrieb, wobei gilt $T_3 > T_2$.

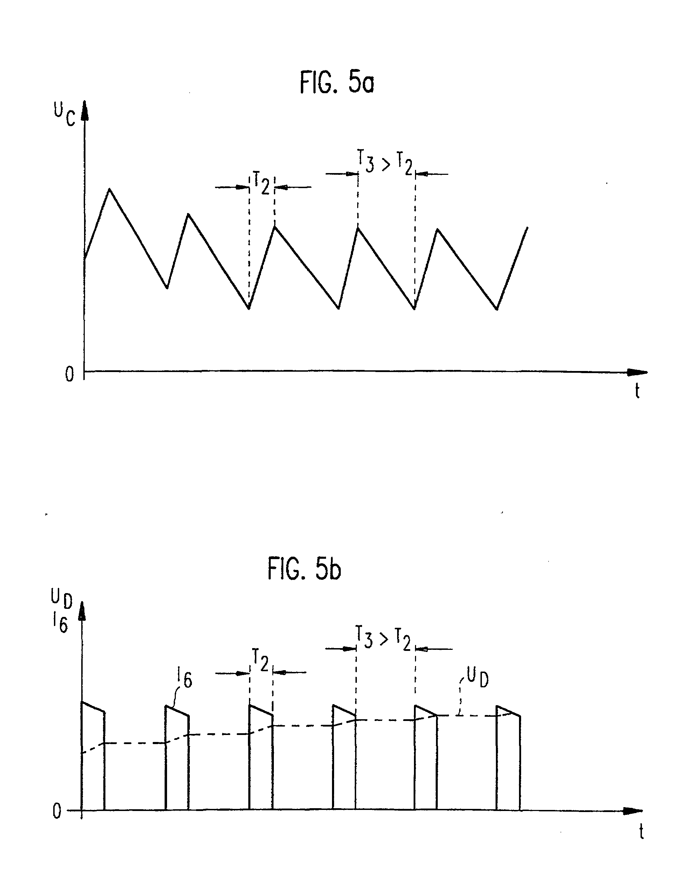

Analog zeigen Figur 5a und 5b die den in Figur 3a und 3b gezeigten Verläufe entsprechenden Strom- und Spannungsverläufe, wobei auch hier aufgrund des Dimmbetriebes gilt $T_3 > T_2$. Es tritt zwar am Verbindungspunkt C zwischen den Kondensatoren C4 und C5 weiterhin ein Spannungsrippel auf, dieser ist jedoch aufgrund der unterschiedlichen Einschaltzeiten der beiden Schalter des Wechselrichters unsymmetrisch. Figur 5b ist zu entnehmen, daß aufgrund der geringeren Einschaltzeit $T_2$ des oberen Schalters 2 das Aufladen des Kondensators C3 und damit der Anstieg der Spannung $U_B$ langsamer erfolgt.

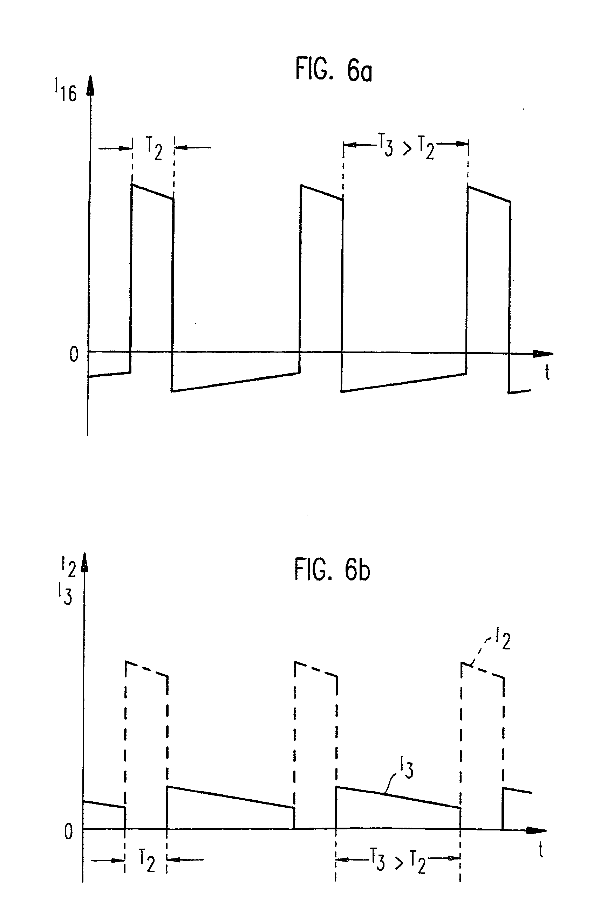

Figur 6a zeigt den sich im Dimmbetrieb ergebende Strom $I_{16}$ über die Primärwicklung des Übertragers 16, während Figur 6b die über die Schalter 2 bzw. 3 fließende

Brückenströme $I_2$ bzw. $I_3$ darstellt. Der in Figur 6a dargestellte Stromverlauf des Primärwicklungsstromes $I_{16}$ entspricht dem vorzeichenmäßig richtigen Summationsstrom der beiden Ströme $I_2$ und $I_3$.

Abschließend sei darauf hingewiesen, daß die Steuerschaltung des in Figur 1 dargestellten elektronischen Transformators, welche die Schaltungselemente 4-15 umfaßt, vorteilhafterweise als ASIC-Baustein (application specific integrated circuit) ausgebildet ist.

**Patentansprüche**

1. Elektronischer Transformator zum Betreiben einer Niedervolt-Halogenlampe (1),

   - mit einem Wechselrichter mit zwei abhängig von einer Zwischenkreisspannung abwechselnd ein- und ausschaltbaren Schaltern (2, 3) zum Bereitstellen einer Ausgangs-Wechselspannung ($U_B$).
   - mit einer Steuerschaltung (4, 15) zum Steuern des Ein- und Ausschaltverhaltens der beiden Schalter des Wechselrichters, und
   - mit einem Übertrager (16), der eingangsseitig mit dem Wechselrichter verbunden ist und an dem ausgangsseitig ein die Niedervolt-Halogenlampe aufweisender Lastkreis anzuschließen ist,

   wobei die Steuerschaltung (4, 15) die Niedervolt-Halogenlampe durch Verändern des Tastverhältnisses zwischen der Einschaltzeit ($T_2$) des ersten Schalters und der Einschaltzeit ($T_3$) des zweiten Schalters des Wechselrichters dimmt,
   **dadurch gekennzeichnet,**
   **daß** die Steuerschaltung (4, 15) die Niedervolt-Halogenlampe durch Vergrößern der Einschaltzeit ($T_3$) des einen Schalters (3) und gleichzeitiges Verringern der Einschaltzeit ($T_2$) des anderen Schalters dimmt, so daß zwischen den Einschaltzeiten ($T_2$, $T_3$) der beiden Schalter (2, 3) im gedimmten Zustand eine möglichst geringe Austastzeit vorhanden ist,
   wobei die Steuerschaltung (4-15) eine Softstartschaltung (13) aufweist, die das Tastverhältnis zwischen den Einschaltzeiten ($T_2$, $T_3$) der beiden Schalter (2, 3) des Wechselrichters derart steuert, daß nach dem Einschalten des elektronischen Transformators die Lampe (1) innerhalb eines bestimmten Zeitintervalls ($T_{ein}$) mittels einer Steuerung des Tastverhältnisses sukzessive von einem voll gedimmten Zustand in den ungedimmten Zustand gefahren wird.

2. Elektronischer Transformator nach Anspruch 1.
   **dadurch gekennzeichnet,**
   **daß** im ungedimmten Zustand der Lampe (1) die Einschaltzeit ($T_2$) des ersten Schalters (2) und die Einschaltzeit ($T_3$) des zweiten Schalters (3) identisch sind.

3. Elektronischer Transformator nach einem der vorhergehenden Ansprüche,
   **dadurch gekennzeichnet,**
   **daß** die Steuerschaltung (4-15) als ASIC-Baustein ausgebildet ist.

4. Elektronischer Transformator nach einem der vorhergehenden Ansprüche,
   **dadurch gekennzeichnet,**
   **daß** die Steuerschaltung (4-15) einen Oszillator (9) mit fester Frequenz und variablem Tastverhältnis aufweist.

**5.** Elektronischer Transformator nach Anspruch 4,
**dadurch gekennzeichnet,**
**daß** die Steuerschaltung (4-15) einen mit dem Oszillator (9) verbundenen Brückentreiber (11) zum Steuern des Ein- und Ausschaltens der Schalter (2, 3) des Wechselrichters aufweist.

**6.** Elektronischer Transformator nach einem der vorhcrgehenden Ansprüche,
**dadurch gekennzeichnet,**
**daß** die Dimmung über eine Potentiometerschaltung (7, R7) erfolgt.

**7.** Elektronischer Transformator nach einem der vorhergehenden Ansprüche,
**dadurch gekennzeichnet,**
**daß** die Dimmung über eine externe Dimmeinheit (8) erfolgt, die über einen Bus, insbesondere einen digitalen Bus, und ein Interface mit der Steuerschaltung (4-15) gekoppelt ist.

**8.** Elektronischer Transformator nach einem der vorhergehenden Ansprüche,
**dadurch gekennzeichnet,**
**daß** die Versorgungsspannung der Steuerschaltung (4-15) durch ein Rückkopplungsnetzwerk (C6, D9, D10, D5, C3) von der Ausgangsspannung ($U_C$) des Wechselrichters abgeleitet ist.

**9.** Elektronischer Transformator nach einem der vorhergehenden Ansprüche,
**dadurch gekennzeichnet,**
**daß** die Steuerschaltung (4-15) eine Zwischenkreisspannung-Ausregelschaltung (5) zum Überwachen der von einer Gleichrichterschaltung (D1-D4) erzeugten Zwischenkreisspannung ($U_E$) aufweist, die mithilfe der Steuerschaltung (4-15) das Tastverhältnis zwischen den Einschaltzeiten ($T_2$, $T_3$) der beiden Schalter (2, 3) des Wechselrichters auf einen bestimmten Tastverhältniswert einstellt, wenn die Zwischenkreisspannung einen bestiminten Schwellenwert ($U_{grenz}$) übersteigt, um die Ausgangsspannung ($U_A$) des Transformators konstant zu halten.

**10.** Elektronischer Transformator nach einem der vorhergehenden Ansprüche,
**dadurch gekennzeichnet,**
**daß** die Steuerschaltung (4-15) eine Timerschaltung (14) aufweist, die bei Vorliegen eines bestimmten Eingangssignales die Ein-/Aus-Steuerung der beiden Schalter (2, 3) für ein bestimmtes Zeitintervall unterbricht und nach Ablauf des bestimmten Zeitintervalls ernent die Ein-/Aus-Steuerung unterbricht, falls das Eingangssignal weiterhin vorliegt, oder die Ein-/Aus-Steuerung wieder aktiviert, falls das Eingangssignal nicht mehr vorliegt.

**11.** Elektronischer Transformator nach Anspruch 10,
**dadurch gekennzeichnet,**
**daß** die Timerschaltung (14) als Pulszähler oder RC-Zeitverzögerungsglied ausgebildet ist.

**12.** Elektronischer Transformator nach einem der vorhergehenden Ansprüche,
**dadurch gekennzeichnet,**
**daß** die Steuerschaltung (4-15) eine Kurzschluß-Überwachungsschaltung (15) aufweist, die den Ausgangsstrom ($I_3$) des Transformators bzw. eine dazu proportionale Meßgröße überwacht und die Ein-/Aus-Steuerung der beiden Schalter (2, 3) des Wechselrichters unterbricht, falls der Ausgangsstrom bzw. die dazu proportionale Meßgröße einen bestimmten Schwellenwert überschreitet.

**13.** Elektronischer Transformator nach Anspruch 12,
**dadurch gekennzeichnet,**
**daß** der Schwellenwert der Kurzschluß-Überwachungsschaltung (15) derart gewählt ist, daß nach Einschalten des elektronischen Transformators die Ein-/Aus-Steuerung der beiden Schalter (2, 3) des Wechselrichters erst dann im Normalbetrieb aktiviert wird, wenn die Lampe (1) ausreichend aufgeheizt ist.

**14.** Elektronischer Transformator nach Anspruch 10 oder 11 und 12 oder 13,
**dadurch gekennzeichnet,**
**daß** das Eingangssignal der Timerschaltung (14) dem Ausgangssignal der Kurzschluß-Überwachungsschaltung (15) entspricht.

**15.** Elektronischer Transformator nach Anspruch 10 oder 11,
**dadurch gekennzeichnet,**

**daß** die Softstartschaltung (13) mit der Timerschaltung (14) gekoppelt ist.

16. Elektronischer Transformator nach einem der vorhergehenden Ansprüche,
    **dadurch gekennzeichnet,**
    **daß** die Steuerschaltung (4-15) eine Tempereturüberwachungsschaltung (6, R6) aufweist, die die Lampe (1) über eine Veränderung des Tastverhältnisses zwischen den Einschaltzeiten ($T_2$, $T_3$) der beiden Schalter (2, 3) des Wechselrichters herunterdimmt, falls die von der Temperaturüberwachungsschaltung erfaßte Temperatur einen bestimmten Temperaturgrenzwert (Temp1) überschreitet.

17. Elektronischer Transformator nach Anspruch 16,
    **dadurch gekennzeichnet,**
    **daß** die Temperaturüberwachungsschaltung (6, R6) die Ein-/Aus-Steuerung der Schalter (2, 3) des Wechselrichters abschaltet, wenn bei einem bestimmten Tastverhältnis die erfaßte Temperatur einen weiteren Temperaturgrenzwert (Temp2) überschreitet, der höher als der erste Temperaturgrenzwert (Temp1) ist.

18. Elektronischer Transformator nach Anspruch 17 und 10 oder 11,
    **dadurch gekennzeichnet,**
    **daß** das Eingangssignal der Timerschaltung (14) das Ausgangssignal der Temperaturüberwachungsschaltung (6, R6) ist, und
    **daß** die Ein-/Aus-Steuerung der Schalter (2, 3) des Wechselrichters durch die Timerschaltung (14) für ein bestimmtes Zeitintervall unterbrochen wird, falls die von der Temperaturüberwachungsschaltung erfaßte Temperatur bei einem bestimmten Tastverhältnis über den weiteren Temperaturgrenzwert (Temp2) liegt.

19. Elektronischer Transformator nach einem der vorhergehenden Ansprüche,
    **dadurch gekennzeichnet,**
    **daß** die Steuerschaltung (4, 15) eine Zwischenkreisspannung-Abschaltungseinheit (4) aufweist, die die Ein-/Aus-Steuerung der Schalter (2, 3) des Wechselrichters unterbricht, falls die Zwischenkreisspannung ($U_E$) einen bestimmten Schwellenwert überschreitet.

20. Elektronischer Transformator nach Anspruch 19 und 10 oder 11,
    **dadurch gekennzeichnet,**
    **daß** das Eingangssignal der Timerschaltung (14) das Ausgangssignal der Zwischenkreisspannung-Abschaltungseinheit (4) ist.

21. Elektronischer Transformator nach einem der vorhergehenden Ansprüche,
    **dadurch gekennzeichnet,**
    **daß** die Steuerschaltung (4-15) eine Leerlauf-Überwachungsschaltung (12) aufweist, die den Ausgangsstrom ($I_3$) bzw. eine dazu proportionale Meßgröße des elektronischen Transformators überwacht und die Ein-/Aus-Steuerung der Schalter (2, 3) des Wechselrichters unterbricht und auf das Vorhandensein eines Leerlaufbetriebes schließt, wenn der Ausgangsstrom bzw. die dazu proportionale Meßgröße einen bestimmten Grenzwert überschreitet.

22. Elektronischer Transformator nach Anspruch 21 und 3,
    **dadurch gekennzeichnet,**
    **daß** die Leerlauf-Überwachungsschaltung (12) nach Erkennen des Leerlaufbetriebes die Oszillationsfrequenz des Oszillators (9) derart erhöht, daß am Ausgangsanschluß (A) des elektronischen Transformators nahezu kein Ausgangsstrom mehr fließt.

23. Elektronischer Transformator nach Anspruch 21 oder 22 und 10 oder 11,
    **dadurch gekennzeichnet,**
    **daß** die Leerlauf-Überwachungsschaltung (12) mit der Timerschaltung (14) gekoppelt ist.

24. Elektronischer Transformator nach einem der Ansprüche 1 bis 20,
    **dadurch gekennzeichnet,**
    **daß** der Wechselrichter über eine Reaktanz von dem Wechselrichterausgang (B, C) an seinen Eingang rückgekoppelt ist.

25. Elektronischer Transformator nach einem der vorhergehenden Ansprüche.
    **dadurch gekennzeichnet,**

**daß** die Schalter (2, 3) des Wechselrichters Leistungstransistoren, insbesondere Feldeffektransistoren, sind.

**Claims**

1.  Electronic transformer for operating a low-voltage halogen lamp (1),

    -   having an inverter with two switches (2, 3) which can be can switched on and switched off alternately in dependence upon an intermediate circuit voltage, for making available an output a.c. voltage ($U_B$),
    -   having a control circuit (4, 15) for controlling the switch-on and switch-off behaviour of the two switches of the inverter, and
    -   having a transformer (16) which is connected on the input side with the inverter and is to be connected on the output side with a load circuit having the low-voltage halogen lamp,

    the control circuit (4, 15) dimming the low-voltage halogen lamp by means of alteration of the duty ratio between the switch-on time ($T_2$) of the first switch and the switch-on time ($T_3$) of the second switch,
    **characterised in that**,
    the control circuit (4, 15) dims the low-voltage halogen lamp by increase of the switch-on time ($T_3$) of the one switch (3) and simultaneous decrease of the switch-on time ($T_2$) of the other switch, such that between the switch-on times ($T_2$, $T_3$) of the two switches (2, 3) there is present in the dimmed condition a blanking time which is as little as possible, the control circuit (4-15) having a soft start circuit which so controls the duty ratio between the switch-on times ($T_2$, $T_3$) of the two switches (2, 3) of the inverter that after the switching on of the electronic transformer the lamp is run up, within a certain time interval ($T_{ein}$), by means of a control the duty ratio, successively from a fully dimmed condition to the undimmed condition .

2.  Electronic transformer according to claim 1,
    **characterised in that**,
    in the non-dimmed condition of the lamp (1), the switch-on ($T_2$) of the first switch (2) and the switch-on ($T_3$) of the second switch (3) are identical.

3.  Electronic transformer according to any preceding claim,
    **characterised in that**,
    the control circuit (4-15) is formed as an ASIC component.

4.  Electronic transformer according to any preceding claim,
    **characterised in that**,
    the control circuit (4-15) has an oscillator (9) of fixed frequency and variable duty ratio.

5.  Electronic transformer according to claim 4,
    **characterised in that**,
    the control circuit (4-15) has a bridge driver (11), connected with the oscillator (9), for controlling the switching on and switching off of the switches (2, 3) of the inverter.

6.  Electronic transformer according to any preceding claim,
    **characterised in that**,
    the dimming is effected by way of a potentiometer circuit (7, R7).

7.  Electronic transformer according to any preceding claim,
    **characterised in that**,
    the dimming is effected by way of an external dimming unit (8) which is coupled with the control circuit (4-15) via a bus, in particular a digital bus, and an interface.

8.  Electronic transformer according to any preceding claim,
    **characterised in that**,
    the supply voltage of the control circuit (4-15) is derived by means of a feedback network (C6, D9, D10, D5, C3) from the output voltage ($U_c$) of the inverter.

9.  Electronic transformer according to any preceding claim,

**characterised in that**,
the control circuit (4-15) has an intermediate circuit voltage adjustment circuit (5) for monitoring the intermediate circuit voltage ($U_E$) generated by a rectifier circuit (D1-D4), which with the aid of the control circuit (4-15) sets the duty ratio between the switch-on times ($T_2$, $T_3$) of the two switches (2, 3) of the inverter to a certain duty ratio value when the intermediate circuit voltage exceeds a certain threshold value ($U_{grenz}$), in order to hold constant the output voltage ($U_A$) of the transformer.

10. Electronic transformer according to any preceding claim,
    **characterised in that**,
    the control circuit (4-15) has a timer circuit (14) which, in the presence of a certain input signal, interrupts the on/off control of the two switches (2, 3) for a certain interval of time and after expiry of the certain interval of time again interrupts the on/off control if the input signal is still present, or reactivates the on/off control if the input signal is no longer present.

11. Electronic transformer according to claim 10,
    **characterised in that**,
    the timer circuit (14) is formed as a pulse counter or a RC delay element.

12. Electronic transformer according to any preceding claim,
    **characterised in that**,
    the control circuit (4-15) has a short-circuit monitoring circuit (15) which monitors the output current ($I_3$) of the transformer, or a parameter proportional thereto, and interrupts the on/off control of the two switches (2, 3) of the inverter if the output current or the parameter proportional thereto exceeds a certain threshold value.

13. Electronic transformer according to claim 12,
    **characterised in that**,
    the threshold value of the short-circuit monitoring circuit (15) is so selected that after switching on of the electronic transformer the on/off control of the two switches (2, 3) of the inverter is only activated in normal operation when the lamp (1) is sufficiently heated.

14. Electronic transformer according to claim 10 or 11 and 12 or 13,
    **characterised in that**,
    the input signal of the timer circuit (14) corresponds to the output signal of the short-circuit monitoring circuit.

15. Electronic transformer according to claim 10 or 11,
    **characterised in that**,
    the soft start circuit (13) is coupled with the timer circuit (14).

16. Electronic transformer according to any preceding claim,
    **characterised in that**,
    the control circuit (4-15) has a temperature monitoring circuit (6, R6) which dims the lamp (1) by way of an alteration of the duty ratio between the switch-on times ($T_2$, $T_3$) of the two switches (2, 3) of the inverter if the temperature detected by the temperature monitoring circuit exceeds a certain temperature limit value (Temp1).

17. Electronic transformer according to claim 16,
    **characterised in that**,
    the temperature monitoring circuit (6, R6) switches off the on/off control of the switches (2, 3) of the inverter if, at a certain duty ratio, the detected temperature exceeds a further temperature limit value (Temp2) which is higher than the first temperature limit value (Temp1).

18. Electronic transformer according to claim 17 and 10 or 11,
    **characterised in that**,
    the input signal of the timer circuit (14) is the output signal of the temperature monitoring circuit (6, R6), and **in that** the on/off control of the switches (2, 3) of the inverter is interrupted by means of the timer circuit (14) for a certain interval of time if the temperature detected by the temperature monitoring circuit at a certain duty ratio lies above the further temperature limit value (Temp2).

19. Electronic transformer according to any preceding claim,

**characterised in that**,
the control circuit (4, 15) has an intermediate circuit voltage switch-off unit (4) which interrupts the on/off control of the switches (2, 3) of the inverter if the intermediate circuit voltage ($U_E$) exceeds a certain threshold value.

**20.** Electronic transformer according to claim 19 and 10 or 11,
**characterised in that**,
the input signal of the timer circuit (14) is the output signal of the intermediate circuit voltage switch-off unit (4).

**21.** Electronic transformer according to any preceding claim,
**characterised in that**,
the control circuit (4-15) has an open-circuit monitoring circuit (12) which monitors the output current ($I_3$) of the electronic transformer, or a parameter proportional thereto, and interrupts the on/off control of the switches (2, 3) of the inverter and determines that an open-circuit operation is present if the output current or the parameter proportional thereto exceeds a particular limit value.

**22.** Electronic transformer according to claim 21 and 3,
**characterised in that**,
the open-circuit monitoring circuit (12), after recognition of the open-circuit operation, so increases the oscillation frequency of the oscillator (9) that virtually no output current flows any longer at the output terminal (A) of the electronic transformer.

**23.** Electronic transformer according to claim 21 or 22 and 10 or 11,
**characterised in that**,
the open-circuit monitoring circuit (12) is coupled with the timer circuit (14).

**24.** Electronic transformer according to any of claims 1 to 20,
**characterised in that**,
the inverter is coupled back, via a reactance, from the inverter output (B, C) to its input.

**25.** Electronic transformer according to any preceding claim,
**characterised in that**,
the switches (2, 3) of the inverter are power transistors, in particular field effect transistors.


**Revendications**

**1.** Transformateur électronique pour l'alimentation d'une lampe halogène basse tension (1),

- avec un onduleur comportant deux commutateurs (2, 3) pouvant être ouverts et fermés de façon alternée, indépendamment d'une tension de circuit intermédiaire pour la mise à disposition d'une tension alternative de sortie ($U_B$),
- avec un circuit de commande (4, 15) pour la commande du comportement d'ouverture et de fermeture des deux commutateurs de l'onduleur, et
- avec un transformateur (16) qui est raccordé du côté entrée avec l'onduleur et auquel doit être raccordé sur le côté sortie un circuit de charge présentant une lampe halogène basse tension,

le circuit de commande (4, 15) faisant varier la lampe halogène basse tension par modification de la durée de cycle entre le temps de commutation ($T_2$) du premier commutateur et le temps de commutation ($T_3$) du deuxième commutateur de l'onduleur,
**caractérisé en ce que**
le circuit de commande (4, 15) fait varier la lampe halogène basse tension par augmentation du temps de commutation ($T_3$) d'un commutateur (3) et diminution simultanée du temps de commutation ($T_2$) de l'autre commutateur, de sorte qu'entre les temps de commutation ($T_2$, $T_3$) des deux commutateurs (2, 3) à l'état de variation, il existe un temps de suppression aussi faible que possible, moyennant quoi le circuit de commande (4-15) présente un circuit à démarrage doux (13) qui commande la durée de cycle entre le temps de commutation ($T_2$, $T_3$) des deux commutateurs (2, 3) de l'onduleur, de telle sorte qu'après l'ouverture du transformateur électronique, la lampe est actionnée d'un état de pleine variation à un état de non-variation à l'intérieur d'un intervalle de temps déterminé ($T_{ein}$) au moyen d'une commande de la durée de cycle de façon successive.

**2.** Transformateur électronique selon la revendication 1, **caractérisé en ce que**

à l'état de non-variation de la lampe (1), le temps d'ouverture ($T_2$) du premier commutateur (2) et le temps d'ouverture ($T_3$) du deuxième commutateur (3) sont identiques.

**3.** Transformateur électronique selon l'une des revendications précédentes, **caractérisé en ce que**

le circuit de commande (4-15) est conçu sous forme de module ASIC.

**4.** Transformateur électronique selon l'une des revendications précédentes, **caractérisé en ce que**

le circuit de commande (4-15) présente un oscillateur (9) avec une fréquence fixe et une durée de cycle variable.

**5.** Transformateur électronique selon la revendication 4, **caractérisé en ce que**

le circuit de commande (4-15) présente un excitateur de pont (11) raccordé à l'oscillateur (9) pour la commande de l'ouverture et de la fermeture des commutateurs (2, 3) de l'onduleur.

**6.** Transformateur électronique selon l'une des revendications précédentes, **caractérisé en ce que**

la variation s'effectue par un circuit de potentiomètre (7, R7).

**7.** Transformateur électronique selon l'une des revendications précédentes, **caractérisé en ce que**

la variation s'effectue par une unité de variateur externe (8) qui est accouplée par l'intermédiaire d'un bus, en particulier d'un bus numérique et d'une interface, au circuit de commande (4-15).

**8.** Transformateur électronique selon l'une des revendications précédentes, **caractérisé en ce que**

la tension d'alimentation du circuit de commande (4-15) est dérivée par un réseau de réinjection (C6, D9, D10, D5, C3) de la tension de sortie ($U_C$) de l'onduleur.

**9.** Transformateur électronique selon l'une des revendications précédentes, **caractérisé en ce que**

le circuit de commande (4-15) présente un circuit de régulation de tension de circuit intermédiaire (5) pour la surveillance du circuit de tension intermédiaire ($U_E$) produit par un circuit de redresseur (D1-D4) qui, à l'aide du circuit de commande (4-15), règle la durée de cycle entre les temps d'ouverture ($T_2$, $T_3$) des deux commutateurs (2, 3) de l'onduleur à une valeur de durée de cycle déterminée lorsque la tension de circuit intermédiaire dépasse une valeur de seuil déterminée ($U_{grenz}$) pour maintenir constante la tension de sortie ($U_A$) du transformateur.

**10.** Transformateur électronique selon l'une des revendications précédentes, **caractérisé en ce que**

le circuit de commande (4-15) présente un circuit de temporisateur (15) qui, en présence d'un signal d'entrée déterminé, interrompt la commande ouverture/fermeture des deux commutateurs (2, 3) pendant un intervalle de temps déterminé et, à l'expiration de l'intervalle de temps déterminé, interrompt à nouveau la commande ouverture/fermeture au cas où le signal d'entrée continue à être présent, ou active à nouveau la commande entrée/sortie au cas où le signal d'entrée n'est plus présent.

**11.** Transformateur électronique selon la revendication 10, **caractérisé en ce que**

le circuit de temporisateur (14) est conçu en tant que compteur d'impulsions ou d'éléments de retard (RC).

**12.** Transformateur électronique selon l'une des revendications précédentes, **caractérisé en ce que**

le circuit de commande (4-15) présente un circuit de surveillance de court-circuit (15) qui contrôle le courant de sortie ($I_3$) du transformateur ou une grandeur de mesure proportionnelle à celui-ci et interrompt la commande ouverture/fermeture des deux commutateurs (2, 3) de l'onduleur dans le cas où le courant de sortie ou la grandeur de mesure proportionnelle à celui-ci dépasse une valeur de seuil déterminée.

**13.** Transformateur électronique selon la revendication 12, **caractérisé en ce que**

la valeur de seuil du circuit de surveillance de court-circuit (15) est choisie de telle sorte qu'après ouverture du transformateur électronique, la commande ouverture/fermeture des deux commutateurs (2, 3) de l'onduleur n'est activée en service normal que lorsque la lampe (1) a suffisamment été chauffée.

**14.** Transformateur électronique selon la revendication 10 ou 11 et 12 ou 13, **caractérisé en ce que**

le signal d'entrée du circuit de temporisation (14) correspond au signal de sortie du circuit de surveillance de court-circuit (15).

**15.** Transformateur électronique selon la revendication 10 ou 11, **caractérisé en ce que**
le circuit de démarrage doux (13) est couplé au circuit de temporisateur (14).

**16.** Transformateur électronique selon l'une des revendications précédentes, **caractérisé en ce que**
le circuit de commande (4-15) présente un circuit de surveillance de température (6, R6) qui fait varier en diminution la lampe (1) par le biais d'une modification de la durée de cycle les temps d'ouverture ($T_2$, $T_3$) des deux commutateurs (2, 3) de l'onduleur, au cas où la température saisie par le circuit de surveillance de température dépasse une valeur limite de température déterminée (Temp1).

**17.** Transformateur électronique selon la revendication 16, **caractérisé en ce que**
le circuit de surveillance de température (6, R6) coupe la commande marche/arrêt des commutateurs (2, 3) de l'onduleur lorsque, pour une durée de cycle déterminée, la température saisie dépasse une autre valeur limite de température (Temp2) qui est supérieure à la première valeur limite de température (Temp1).

**18.** Transformateur électronique selon la revendication 17 et 10 ou 11, **caractérisé en ce que**
le signal d'entrée du circuit de temporisateur (14) est le signal de sortie du circuit de surveillance de température (6, R6), et **en ce que**
la commande marche/arrêt des commutateurs (2, 3) de l'onduleur est interrompue par le circuit de temporisateur (14) pour un intervalle de temps déterminé au cas où la température saisie par le circuit de surveillance de température se situe au-dessus de l'autre valeur limite de température (Temp2) pour une durée de cycle déterminée.

**19.** Transformateur électronique selon l'une des revendications précédentes, **caractérisé en ce que**
le circuit de commande (4, 15) présente une unité de coupure de tension de circuit intermédiaire (4) qui interrompt le circuit marche/arrêt des commutateurs (2, 3) de l'onduleur au cas où la tension de circuit intermédiaire ($U_E$) dépasse une valeur seuil déterminée.

**20.** Transformateur électronique selon la revendication 19 et 10 ou 11, **caractérisé en ce que**
le signal d'entrée du circuit de temporisateur (14) est le signal de sortie de l'unité de coupure de tension de circuit intermédiaire (4).

**21.** Transformateur électronique selon l'une des revendications précédentes, **caractérisé en ce que**
le circuit de commande (4-15) présente un circuit de surveillance de marche à vide (12) qui surveille le courant de sortie ($I_3$) ou une grandeur de mesure proportionnelle à celui-ci du transformateur électronique et la commande marche/arrêt des commutateurs (2, 3) de l'onduleur et se ferme en présence d'un fonctionnement de marche à vide lorsque le courant de sortie ou la grandeur de mesure proportionnelle à celui-ci dépasse une valeur limite déterminée.

**22.** Transformateur électronique selon la revendication 21 et 3, **caractérisé en ce que**
le circuit de surveillance de marche à vide (12), après constatation du fonctionnement de marche à vide, augmente la fréquence d'oscillation de l'oscillateur (9) de telle sorte qu'au niveau de la connexion de sortie (A) du transformateur électronique, il ne circule pratiquement plus aucun courant de sortie.

**23.** Transformateur électronique selon la revendication 21 ou 22 et 10 ou 11, **caractérisé en ce que**
le circuit de surveillance de marche à vide (12) est couplé au circuit de temporisateur (14).

**24.** Transformateur électronique selon l'une des revendications 1 à 20, **caractérisé en ce que**
l'onduleur est réinjecté par le biais d'une réactance depuis la sortie d'onduleur (B, C) à son entrée.

**25.** Transformateur électronique selon l'une des revendications précédentes, **caractérisé en ce que**
les commutateurs (2, 3) de l'onduleur sont des transistors de puissance, en particulier des transistors à effet de champ.

FIG. 1

EP 0 862 844 B1

FIG. 2a

FIG. 2b

FIG. 2c

## FIG. 3a

$T_3 = T_2$

$T_2$

$U_C$

$t$

## FIG. 3b

$T_3 = T_2$

$T_2$

$U_D$
$I_6$

$U_D$

$I_6$

$t$

FIG. 4a

FIG. 4b

FIG. 4c

## FIG. 5a

## FIG. 5b

## FIG. 6a

## FIG. 6b

20

FIG. 7

FIG. 8a

FIG. 8b

FIG. 9